# EUROPEAN PATENT APPLICATION

(11) **EP 2 129 117 A1**
(43) Date of publication of application: **02.12.2009**
(21) Application number: 08157070.7
(22) Date of filing: 28.05.2008
(51) Int. Cl.: H04N 7/173

(54) **Information acquisition in digital video broadcasting terminal device**

(71) Applicant: Nokia Corporation, 02150 Espoo (FI)
(72) Inventor: Kiiskinen, Arto, 02520 Kirkkonummi (FI)
(74) Representative: Antila, Harri Jukka Tapani

(57) **Abstract**

The present invention provides fast execution of a transaction, such as acquisition of rights to playback given content broadcasted by a DVB-H system. The transaction is carried out by acquiring from a database of a terminal device, transaction information corresponding to the transaction information broadcasted in an electronic service guide of the DVB-H system and by executing the transaction on the basis of the transaction information acquired from the database before reception of the electronic service guide is completed in the terminal device.

## Description

### Field

The invention relates to the field of digital video broadcasting for handheld devices and, particularly, to carrying out a transaction in a digital video broadcasting receiver.

### Background

Digital video broadcasting for handheld devices (DVB-H) is a technical standard established to provide mobile devices with capability to receive terrestrial digital television (DTV) in Europe. DVB-H technology can implement mobile multimedia broadcasting that provides high-quality voice and video services anytime and anywhere.

DVB-H communication system comprises a broadcasting network that broadcasts media content to the handheld devices. The broadcasting network also broadcasts media-content-related meta-information, downloadable additional content, etc. Some additional content may have to be purchased, in which case digital rights management may be involved in delivery of the additional content. Information on services available to the user and how the services are accessed is mostly included in an Electronic Service Guide (ESG) in a DVB-H system. A user may select a TV channel or a radio channel of interest through the ESG or may select an item to be downloaded. The ESG provides information for connecting the terminal to a specific Internet Protocol (IP) stream within a DVB-H transport stream. In order to implement the IP connection, the terminal may establish a communication connection with a media stream server through a mobile telecommunication network, such as UMTS (Universal Mobile Telecommunication System) or GSM (Global System for Mobile Communications).

A terminal device detects, from the ESG received with the broadcasted information, types of ESG data capable of being received and detects how to acquire ESG data. Then, the terminal device initiates an ESG acquisition process in which a terminal collects and processes ESG data. Thereafter, the terminal device executes an ESG update process in which a terminal stores the latest version of ESG data. An operator selling the terminal device to a user may have provided the terminal device with rights for determined additional content, e.g. encrypted television channels. When powered up, the terminal detects which additional contents are available to it, i.e. determines the content to which it has rights to access. This typically involves communication with DVB-H system in order to acquire a decryption key, for example, and the contact information of the system is defined in the ESG. When downloading the ESG, a conventional terminal device must wait for completion of the ESG, because it has no knowledge of the actual location of the needed information in the ESG. The location of given information in the ESG may differ between different service platforms (different service providers).

### Brief description

An object of the present invention is to reduce the time needed for executing a transaction requiring information contained in the electronic service guide broadcasted according to digital video broadcasting technology.

This object is achieved by the subject matter of appended independent claims

Embodiments of the invention are defined in the dependent claims.

### List of drawings

Embodiments of the present invention are described below, by way of example only, with reference to the accompanying drawings, in which
Figure 1 illustrates communication between a terminal device and a DVB-H system;
Figure 2 illustrates a data model of an electronic service guide of the DVB-H system;
Figure 3 is a flow diagram illustrating a process for performing a fast transaction according to an embodiment of the invention;
Figure 4 illustrates elements of the terminal device according to an embodiment of the invention; and
Figure 5 is a signaling diagram illustrating an embodiment of the fast transaction.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

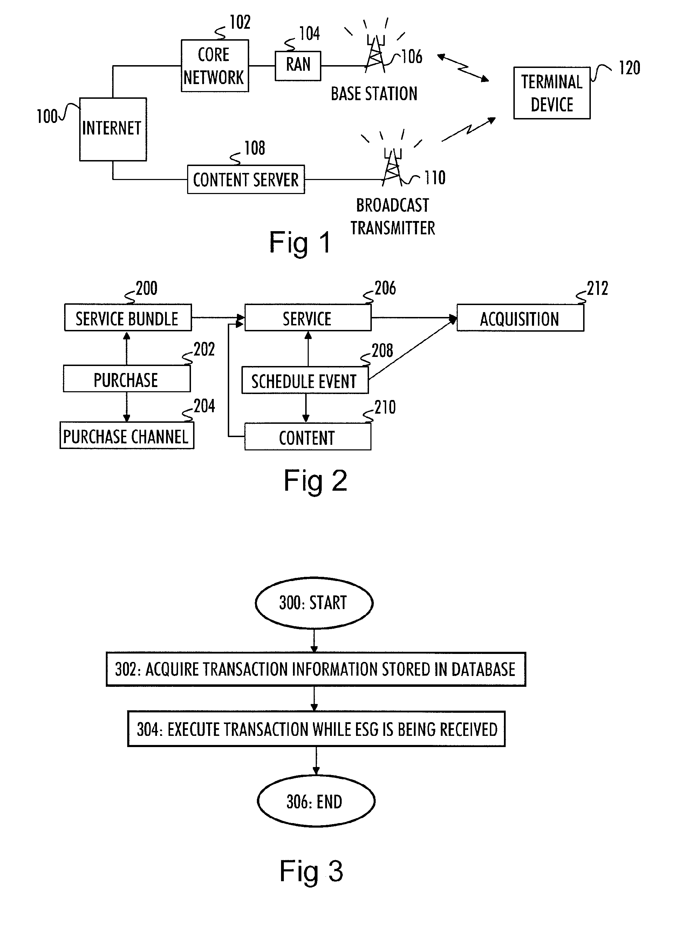

A general architecture of Digital Video Broadcasting - Handheld (DVB-H) communications is illustrated in Figure 1. A terminal device 120 employing embodiments of the invention may be configured to receive DVB-H content from a DVB-H broadcasting system and to establish a bi-directional communication link with the DVB-H broadcasting system over a radio access network of a bi-directional communication system. The terminal device 120 may be a mobile communication device, such as a mobile phone, a personal digital assistant (PDA), a laptop computer, etc.

The DVB-H broadcasting system may comprise a content server 108 generating DVB-H data streams comprising DVB-H content such as television programs, electronic service guides (ESG), and any side information related to DVB-H content. The DVB-H data streams are broadcasted to the terminal device 120 and other terminal devices over an air interface through a DVB-H broadcasting network comprising a network of broadcast transmitters such as the one 110 illustrated in Figure 1. Since the DVB-H broadcasting network is a unidirectional communication system, the content server 108 may be connected to the Internet 100 in order to establish a bi-directional communication link with terminal devices in order to enable online purchase of encrypted content, for example.

The terminal device 120 may be configured to establish the bi-directional communication link with the content server 108 through the bi-directional communication system which may be a mobile telecommunication system, such as UMTS (Universal Mobile Telecommunication System), GSM (Global System for Mobile Communications), or WLAN (Wireless Local Area Network). The terminal device 120 may support multiple radio access standards and select a suitable one according to radio environment in which the terminal device 120 is located. The terminal device 120 may establish a radio communication link with a base station 106 of the bi-directional communication system and then utilize the radio communication link to establish the communication link with the content server 108 through a radio access network 104 and core network 102 of the bi-directional communication system. The communication link between the terminal device 120 and the content server 108 may be formed according to Internet protocol (IP) or User Datagram protocol (UDP), for example.

As mentioned above, the DVB-H broadcasting system broadcasts media content, such as television programs and meta information related to the television programs, and the ESG comprising information on the media content, such as program time tables, purchase information, contact information for establishing the communication link with the content server 108, etc. Figure 2 illustrates an ESG data model as defined in the DVB-H standard specification TS 102 471. The ESG data model of Figure 2 illustrates a plurality of ESG fragments 200-212 and how they refer to each other. The references between the fragments are illustrated by arrows. The ESG data model is described in very general level, because it is assumed to be well known to one skilled in the art.

The ESG is primarily user-attractor data, enabling the user to select and acquire content, and the ESG comprises for that purpose information on the content itself but also information on services available to the user and information on how to acquire such services. A service fragment 206 enables definition of a service offering which may be a streaming service, a download service, or a combination of these. The service fragment 206 may comprise descriptive and/or visual information to provide the user with information on the service and control information to enable the terminal device 120 to configure itself for the consumption of the service. The configuration of the consumption of the service is achieved via a reference to one or more acquisition fragments 212. The acquisition fragment 212 provides information required for the consumption of the content referenced by a service or schedule event fragment 206 or 208. Specifically the acquisition fragment 212 contains a session description protocol (SDP) of the service or the location of an SDP stream which carries the SDP.

A schedule event fragment 208 defines a period of time during which content is transmitted in connection with the service fragment to which the schedule event fragment refers. The schedule event fragment 208 may define timing of a traditional television program or time duration when a certain download is available. Content fragment 210 provides metadata about media content, such as the television program.

A service bundle fragment 200 is used to group a plurality of services. The grouping may be related to a purchase of a certain group of services, in which case the group of services may be allocated to the same service bundle. Accordingly, purchase of rights may be performed for the group of services forming the service bundle in one purchase operation. A purchase fragment 202 is an entity which provides information necessary to gain access to a particular group of services. This information is composed of both user attractor information and data required by the terminal device to execute purchase of rights to consume the set of services. A purchase channel fragment 204 provides information on a service provider offering service bundles for purchase. This information includes a description of the provider and its contact points, e.g. telephone number, URL (Uniform Resource Locator), that can be displayed to the user, or used by the terminal for an automatic purchase.

As mentioned in the background section, the ESG is received and constructed in the terminal device 120 after the terminal device 120 is powered up, and the completion of the ESG takes a relatively long time. Therefore, waiting the ESG to complete before carrying out a certain transaction reduces user experience. This poses a problem, because it prolongs the acquisition of the required information from the ESG, prolongs the acquisition of the desired content, and reduces user experience.

An embodiment of the present invention stores information known to be contained in the ESG beforehand in a database of the terminal device 120, and this information is used to carry out the transaction before the ESG has been completed in the terminal device 120. One such use scenario is the purchase of rights to consume a service, e.g. purchase of rights to playback given encrypted television channels, when the terminal device 120 is powered up for the first time. An operator may sell terminal devices with rights already provisioned for them. At the first boot of such a terminal device, the terminal device fetches the rights objects, including decryption keys, corresponding to the rights provisioned for the terminal device from the content server. A portion of the content server managing the rights is known as a broadcast account manager (BAM) in the art.

Figure 3 is a flow diagram illustrating a process for performing a fast transaction according to an embodiment of the invention. The process of Figure 3 is described in a general level, and a more detailed description for a specific embodiment is provided later. The process may be executed by a processing unit of the terminal device 120, the processing unit being controlled by a computer program, but the process may involve also utilization of other software and hardware of the terminal device, such as a communication unit(s) to communicate with the content server and to receive DVB-H content and a user interface to play the content to the user.

The process starts in block 300. In block 302, transaction information corresponding to transaction information broadcasted in the ESG of the DVB-H system is acquired from a database of the terminal device 120. The transaction information stored in the database is acquisition information indicating how to acquire content playback information from a content server, which content playback information is needed to play certain content broadcasted by the DVB-H system. In block 304, a transaction is executed on the basis of the transaction information acquired from the database before reception of the ESG is completed in the terminal device 120. The execution of the transaction may comprise acquiring the content playback information from the content server on the basis of the acquisition information. The process ends in block 306.

The process of Figure 3 may be carried out in an apparatus applicable to the terminal device described above and comprising a processing unit (or other processing means) to carry out the steps of Figure 3. The execution of the process may require communication with external components and/or with the content server of the digital video broadcasting system. Therefore, the apparatus may comprise an interface or a communication unit to provide the apparatus with communication capabilities. In order to enable the communication connection with the content server, the communication unit may provide the apparatus with radio communication capabilities. The interface of the apparatus may be configured to establish a communication connection with other components of the terminal device. The interface may be a physical interface, or it may be seen as an interface between two (or more) computer programs. The interface may also be considered as a link or part of a link between the processing unit and the communication unit.

Accordingly, the transaction conventionally requiring first the completion of the reception of the ESG is being executed or even completed before the reception of the ESG is completed. Therefore, conduction of the transaction is considerably faster than with the conventional solution.

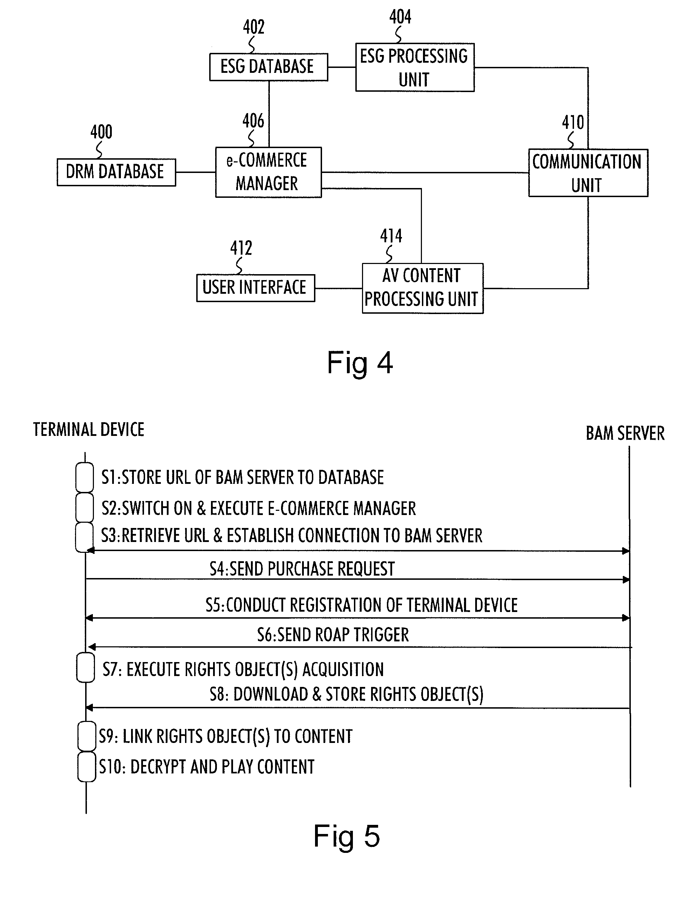

Next, a more detailed embodiment for carrying out the process of Figure 3 is described with reference to Figures 4 and 5. This embodiment describes execution of a transaction relating to acquisition of rights to consume a service upon a first boot of the terminal device. The scenario, in which the embodiment is carried out, may be that described above, i.e. the operator has sold the terminal device to a user and provided the terminal device with rights for playback of a given encrypted television channel. Upon the first boot, the terminal device makes a purchase to acquire rights object(s) including decryption keys corresponding to the rights provisioned for the terminal device. Figure 4 illustrates elements of the terminal device 120 related to carrying out the embodiment, and Figure 5 is a signaling diagram illustrating the process and communication between the terminal device carrying out the purchase and the content server (or broadcast account manager (BAM) server) granting the rights object(s).

Referring to Figure 4, let us assume that a user has purchased the terminal device from the operator and has just powered up the terminal device for the first time. Powering up the terminal device may comprise executing a DVB-H application to start reception of the ESG and a procedure for acquiring means to playback the content for which the terminal device is provided with rights to consume. Then, a communication unit 410 starts reception of the DVB-H content, including the ESG. The communication unit 410 may comprise hardware and software required to convert received DVB-H radio signals into application data. Furthermore, the communication unit 410 may have hardware and software to establish the bi-directional communication link with a radio system providing the bi-directional communication link in the area where the terminal device resides. Accordingly, the communication unit 410 implements both reception of the DVB-H content from the DVB-H broadcasting system and communication with the BAM server via the bi-directional communication link, e.g. through UMTS, GSM, or WLAN radio access.

Meanwhile, an e-commerce manager 406 initiates a procedure to make a purchase request to the BAM server in order to acquire rights to consume the service. The e-commerce manager 406 may be configured to execute the rights acquisition procedure as soon as the e-commerce manager 406 is launched in the terminal device. The e-commerce manager 406 may be a software application, and it may operate in connection with or as a part of digital rights manager of the terminal device. Accordingly, the e-commerce manager 406 may check from a digital rights management (DRM) database 400 for what content should be purchased from the BAM server and an URL of the BAM server to which the purchase request should be transmitted. The content to be purchased as well as the URL of the BAM server may be stored in the terminal device beforehand, e.g. in the digital rights management database 400, so that the e-commerce manager may execute the rights acquisition procedure immediately without the need for completion of the ESG which conventionally contains the URL of the BAM server.

Upon acquiring the URL of the BAM server from the DRM database 400, the e-commerce manager 406 sends the purchase request with the URL to the communication unit 410 and, thus, configures the communication unit 410 to establish the bi-directional communication link with the BAM server having the URL received from the e-commerce manager 406 and sends the purchase request to the BAM server.

Then, the BAM server processes the purchase request received from the terminal device. This may include registration of the terminal device and storing registration information of the terminal device in a database of the BAM server, in which case additional communication may be carried out between the terminal device and the BAM server to verify the identity of the terminal device etc. Processing the purchase request further comprises transmission of rights object(s) related to the purchased content to the terminal device. In conjunction with transmission of the rights object(s) to the terminal device, the BAM server transmits to the terminal device one or more decryption keys related to the purchased content, one or more content identifiers of the purchased content items (purchase item ID), a purchase type indicator and duration indicator related to each purchased content item, and a duration indicator of the rights object(s). The decryption key is used to decrypt a second decryption key included in a keystream broadcasted by the DVB-H broadcast system, wherein the second decryption key decrypts a content item corresponding to an identifier of a purchased content item associated with the decryption key received from the BAM server. As a consequence, the identifier of the purchased content item defines the content item which has been purchased and is to be decrypted by using the decryption key associated with the content item. A purchase type indicator indicates the type of the purchase for the content item, e.g. permanent or temporary subscription of the content, and the duration indicator indicates the duration of the subscription of the content item, i.e. a period during which the terminal device is entitled to the content item. The duration indicator of the rights object indicates the duration the rights object is valid. For example, the decryption key may be changed before the expiry of the subscription of the content item. In such a case, a new rights object may be fetched from the server.

Meanwhile, the ESG is being received in the terminal device through the communication unit 410. The communication unit forwards, the ESG-related data to an ESG processing unit 404 configured to construct the ESG from the ESG-information received from the DVB-H broadcasting network through the communication unit 410. The ESG is received in multiple sessions, wherein first is received channel information, subscription data, and information on currently presented programs. Information on programs received later is received in further sessions. The ESG processing unit 404 stores the received ESG in an ESG database 402 and displays the ESG information to the user upon request through a user interface 412 of the terminal device.

Upon reception of the above-mentioned rights objects and related information in communication unit 410 of the terminal device, the communication unit 410 forwards this information to the e-commerce manager 406. Then, the e-commerce manager 406 links the received rights objects and related information to the actual content through the received ESG. The e-commerce manager 406 may read a session description protocol (SDP) file from the ESG. The SDP file may define the IP address and port combinations associated with each content item and the decryption key streams. In practice, the e-commerce manager 406 reads a received purchase item ID and searches the ESG database 402 for a corresponding ID in the SDP file of the received ESG. In the ESG, this ID may be unique for each content item, e.g. television channel audiovisual content. When the corresponding ID is found in the ESG database, the e-commerce manager 402 links these two identifiers, thereby effectively opening IP sockets to an IP address and port combination of the purchased content item and linking the decryption key associated with the purchase item ID to the encrypted content.

Then, the e-commerce manager 406 may configure the communication unit 410 to open the second decryption key received in the keystream from the DVB-H broadcast system with the decryption key received from the BAM server in the rights object. The second decryption key is typically changed periodically, so the second (actual) decryption key may be acquired without changing the key of the rights object. The communication unit 410 may comprise an entity called "network interface agent" which is configured to open an IP socket of the IP address and port associated with the decryption key stream in order to receive the encrypted second decryption key of the purchased content item.

The encrypted second decryption key is then applied to the digital rights manager described above, and the digital rights manager decrypts the second decryption key. The decrypted second decryption key is then applied back to the network interface agent which is then configured to decrypt the encrypted content with the second decryption key and to apply the decrypted content to an audiovisual (AV) content processing unit 414 configured to process the decrypted content and to display the content to the user through the user interface 412. The decryption and display of this content is naturally carried out only in response to an input command from the user, i.e. when the user wishes to consume the decrypted content.

The e-commerce manager 406 may perform the linking between the purchase item IDs received form the BAM server and the actual content as defined in the ESG after the reception of the ESG has been completed or during the reception of the ESG. For example, the e-commerce manager 406 may monitor completion of sessions in the ESG and carry out linking after completion of each ESG session. Accordingly, the e-commerce manager 406 may perform linking between the encrypted television channels or currently displayed programs and the purchase item IDs upon completion of the first ESG session. Furthermore, the e-commerce manager 406 may perform linking between the television programs presented later and the purchase item IDs upon completion of the later ESG session(s). Accordingly, at least major part of the linking with the purchase item IDs and the actual purchased content may be carried out before completion of the reception of the ESG.

The e-commerce manager 406 may store the received purchase item ID, service type and duration indicators, and the duration indicator of the rights object as well as the link(s) with the actual content to the DRM database 400. This may be done for each purchase item. The purchase item may relate to a service bundle defined above or to a single service. The e-commerce manager 406 may use the service type and duration indicators to set and monitor a time limit during which the decryption of the purchased content item is carried out. When a time limit set by the time duration indicator expires, the e-commerce manager 406 disables the network interface agent with respect to decrypting the purchased content. Additionally, the e-commerce manager 406 may configure the terminal device to display to the user a notification of the expired rights to the content through the user interface 412.

The elements of Figure 4 may be embodied by hardware and software elements. For example, the databases 400, 402 may be stored in a memory unit of the terminal device, the ESG processing unit 404, the e-commerce manager 406 as well as the DRM manager, and the AV content processing unit 414 may be implemented by one or more processing units controlled by software. In particular, the operation of the e-commerce manager 406 may be controlled by software defined in XML (extensible Markup Language). The user interface 412 may comprise hardware, such as a display unit, a loudspeaker, and one or more input devices. The communication unit 410 may comprise hardware carrying out radio frequency and baseband processing of received and transmitted signals and software defining physical layer signal processing algorithms and higher layer network and transport communication protocols, such as the network interface agent.

Next, the above-described purchase procedure is described in more detail with reference to the signaling diagram of Figure 5. As described above, the procedure of Figure 5 is executed before the reception of the ESG is completed. In S1, the URL of the BAM server is stored in a database of the terminal device. This step may be performed before the terminal device is sold to the user, e.g. in the manufacturing phase of the terminal device. In S2, the terminal device is switched on and the e-commerce manager is executed. The e-commerce manager may be launched when the user launches a DVB-H application, or the e-commerce manager may be launched automatically during the boot up of the terminal device.

In S3, the terminal device retrieves the URL of the BAM server from the database and establishes a bi-directional communication connection with the BAM server. The bi-directional communication connection may be established through a UMTS, GSM, or WLAN radio access network, for example. In S4, the terminal device sends a purchase request to the BAM server. The contents of the purchase request may also be stored in the database of the terminal device. In S5, registration of the terminal device to a database of the BAM server is conducted. The registration may be carried out, if the terminal device makes the purchase for the first time. Otherwise, S5 may be omitted. The registration may include communication between the terminal device and the BAM server, and the BAM server may store identification and other information of the terminal device needed for the registration.

In S6, the BAM server responds to the purchase request sent by the terminal device in S4 and sends a rights object acquisition protocol (ROAP) trigger to the terminal device. The rights object acquisition protocol is a protocol for downloading the rights object including the decryption key to the purchased content from the BAM server. The ROAP trigger may comprise the purchase item ID described above and the subscription type indicator.

In S7, the terminal device executes the rights object acquisition protocol in response to the ROAP trigger. If the terminal device receives multiple ROAP triggers and the same number of purchase item IDs, the terminal device may carry out the ROAP for each trigger, i.e. acquire the rights object for each purchase item ID. In S8, the terminal device downloads the rights object for each purchase item ID from the BAM server. The terminal device then stores the downloaded rights object(s) to the database for later use in decryption of the purchased content. The rights object may comprise a decryption key for the purchased content defined by the purchase item ID and the duration indicator of the purchased content.

In S9, the terminal device links the downloaded rights object(s) to the content defined in the ESG. As described above, the terminal device searches the received ESG for a content identifier matching with the purchase item ID received from the BAM server in order to determine the content decrypted with the decryption key associated with the purchase item ID. Table 1 below provides an example of a service bundle table received in the service bundle fragment of the ESG, which may be used to link the purchase item IDs to the content.

**(Table 1)**

| [Service Bundle] | | |
|---|---|---|
| Dcold: 2 | Objectld:244 | Purchaseltemld:250 |
| Dcold: 2 | Objectld:241 | Purchaseltemld:255 |
| Dcold: 2 | Objectld:243 | Purchaseltemld:258 |
| Dcold: 2 | Objectld:245 | Purchaseltemld:258 |

As it can be seen, purchase item ID of 250 is linked to an object ID of 244, etc. The objects may be television programs, television channels, or other content. Further, Table 1 denotes that objects 243 and 245 are linked to the same purchase item ID, which means that the two contents may be consumed with one purchase. The object IDs may further be linked to IP address and port combinations so that the terminal device is able to open the right IP socket for the reception of the purchased content, as described above. Upon completing S9, the terminal device is capable of decrypting and playing the purchased content in S10 through the user interface of the terminal device upon request from the user. The decryption requires acquisition of the actual key from the keystream broadcasted by the DVB-H system, and this actual key is decrypted from the received keystream with the decryption key received from the BAM server.

Step S9 may also be carried out without involving the ESG in the linking procedure. In this alternative embodiment, the terminal device may attempt to decrypt each encrypted content with the decryption key received in the rights object and determine on the basis of the result whether or not the decryption key matches with the encryption of the content. With such a trial-and-error procedure, the terminal device may deduce the links between the purchase item ID, i.e. the decryption key, and the content.

As described above, the procedure of Figure 5 is executed before the reception of the ESG is completed. In practice, at least steps S1-S8 may be completed before the reception of the ESG is completed. Depending on which sessions of the ESG the content items associated with the purchased items are received, even S9 may be completed before the completion of the ESG in the terminal device and execution of S10 may be in progress. Alternatively, the above-described procedure is at least being carried out at the time instant the ESG is completed, i.e. one of the steps S2-S9 is in progress.

The implementation of the embodiments of the invention requires only minor modifications with respect to existing terminal devices. First of all, the URL of the content server, with which the purchase is carried out, is stored in the database contained in a memory unit of the terminal device. The URL of the content server may be known beforehand, because it may be the content server that terminal devices of the operator in question use. Then, XML code defining the operation of the terminal device with respect to DVB-H-related transactions is customized so as to configure the terminal device to carry out the purchase of content before the ESG is completed. This embodiment may be generalized to other transactions conventionally requiring the completion of the ESG before carrying out the transaction. If certain information contained in the ESG is known before the completion of the reception of the ESG, and that information is required in carrying out a transaction, such information may be stored in the memory unit of the terminal device beforehand so as to enable the execution of the transaction before completion of the ESG.

In the description above, the scenario in which the embodiments were implemented was the first boot up of the terminal device and acquisition of rights for content pre-provisioned for the user by the operator. This is not the only scenario in which the invention is applicable. Another use scenario may be such that the DVB-H application is temporarily disabled in the terminal device, i.e. ESG is not being received. If a user decides to purchase certain DVB-H content in such a disabled state, a conventional solution starts reception of the ESG to find out the URL of the BAM server. In this embodiment of the invention, the URL is already stored in the terminal device, so the terminal device may establish the bi-directional communication link with the BAM server instantly without having to wait for the completion of the ESG.

In another embodiment, the terminal device is configured to contact the BAM server periodically, e.g. once a week, to check for content provisioned for the terminal device. For example, the operator may have a free promotion to consume a certain content for a period of time free of charge. If such content is found at the BAM server, the terminal device may initiate ESG update procedure and carry out the purchase of the content items with the BAM server while the ESG is being updated. This procedure is also faster than the conventional one, because in the conventional solution, the ESG would have to be updated first to find out the URL of the BAM server.

The processes or methods described in Figures 3 and 5 may be carried out in the form of a computer process defined by a computer program. The computer program may be in source code form, object code form, or in some intermediate form, and it may be stored in a carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

The present invention is applicable to a terminal device of the DVB-H system and a bi-directional communication system. The protocols used, the specifications of such systems, their network elements and subscriber terminals, develop rapidly. Such development may require extra changes to the described embodiments. Therefore, all terms and expressions should be interpreted broadly and they are intended to illustrate, not to restrict, the embodiment. It will also be obvious to a person skilled in the art that, as technology advances, the inventive concept can be implemented in various ways. The invention and its embodiments are not limited to the examples described above but may vary within the scope of the claims.

## Claims

1. A method, comprising:
acquiring, from a database of an apparatus, transaction information corresponding to transaction information broadcasted in an electronic service guide of a digital video broadcasting system; and
executing a transaction on the basis of the transaction information acquired from the database before reception of the electronic service guide is completed in the apparatus.

2. The method of claim 1, wherein the transaction information stored in the database is acquisition information indicating how to acquire content playback information from a content server, the execution of the transaction further comprising:
acquiring the content playback information from the content server on the basis of the acquisition information.

3. The method of claim 2, wherein the acquisition information comprises a uniform resource locator of the content server and information on contents for which one or more playback rights objects are acquired from the uniform resource locator, acquiring the content information further comprising:
acquiring one or more playback rights objects from the content server having the uniform resource locator.

4. The method of any preceding claim, further comprising:
receiving content playback information in the transaction from a content server with which the apparatus communicates during the transaction; and
linking the received content playback information to the content information received in the electronic service guide in order to playback the content.

5. The method of claim 4, further comprising: performing the linking before the reception of the electronic service guide is completed in the apparatus.

6. The method of claim 4 or 5, further comprising:
receiving, as content playback information, one or more rights objects comprising one or more decryption keys and a content identifier for each decryption key to associate the decryption key with given content;
decrypting the content with the decryption key associated with the content; and
playing back the decrypted content via the user interface of the apparatus.

7. The method of any one of the preceding claims, the method being carried out only in connection with the first boot up of the apparatus.

8. The method of any preceding claim, wherein the transaction comprises communication with the content server over a bi-directional communication system.

9. An apparatus comprising processing means configured to acquire, from a database, transaction information corresponding to the transaction information broadcasted in an electronic service guide of a digital video broadcasting system, and to execute a transaction on the basis of the transaction information acquired from the database before reception of the electronic service guide is completed in the apparatus.

10. The apparatus of claim 9, wherein the transaction information stored in the database is acquisition information indicating how to acquire content playback information from a content server, the apparatus further comprising a communication unit configured to establish a communication connection with the content server, and the processing means are further configured to carry out the execution of the transaction by acquiring content playback information from the content server on the basis of the acquisition information.

11. The apparatus of claim 10, wherein the acquisition information comprises a uniform resource locator of the content server and information on contents for which one or more playback rights objects are acquired from the uniform resource locator, and wherein the processing means are configured to acquire the content playback information by acquiring one or more playback rights objects from the content server having the uniform resource locator.

12. The apparatus of any one of the preceding claims 9 to 11, wherein the processing means are further configured to communicate with a content server during the transaction and, to receive content playback information in the transaction from the content server, and to link the received content playback information to content information received in the electronic service guide in order to playback the content.

13. The apparatus of claim 12, wherein the processing means are further configured to perform the linking before the reception of the electronic service guide is completed in the apparatus

14. The apparatus of claim 12 or 13, wherein the processing means are configured to receive, as the content playback information, one or more rights objects comprising one or more decryption keys and a content identifier for each decryption key to associate the decryption key with given content, to decrypt the content with the decryption key associated with the content, and to playback the decrypted content via a user interface.

15. The apparatus of any one of the preceding claims 9 to 14, wherein the processing means are configured to execute the transaction only in connection with the first boot up of the apparatus.

16. The apparatus of any one of the preceding claims 9 to 15, further comprising a communication unit to establish a bi-directional communication link with a content server over a bi-directional communication system, wherein the transaction comprises communication with the content server over the bi-directional communication system.

17. The apparatus of any one of the preceding claims 9 to 16, wherein the apparatus is configured for use in a terminal device of a digital video broadcasting system.

18. A terminal device of a digital video broadcasting system, comprising the apparatus according to any one of the preceding claims 9 to 17.

19. A computer program product embodied on a distribution medium readable by a computer and comprising program instructions which, when executed by the computer, perform the method according to any preceding claim 1 to 8.
